# EUROPÄISCHE PATENTSCHRIFT

(11) **EP 4 513 040 B1**
(45) Veröffentlichungstag und Bekanntmachung des Hinweises auf die Patenterteilung: **24.06.2026**
(21) Anmeldenummer: 24221402.1
(22) Anmeldetag: 10.05.2023
(51) Int. Cl.: F16L 37/14, F04D 29/42, F16L 37/084, F16L 37/091, F16L 37/098, F16L 37/10

(54) **ANSCHLUSSEINRICHTUNG, VERFAHREN ZUR MONTAGE EINER ANSCHLUSSEINRICHTUNG UND VERWENDUNG EINER PUMPE**
CONNECTING DEVICE, METHOD FOR MOUNTING A CONNECTING DEVICE AND USE OF A PUMP
DISPOSITIF DE RACCORDEMENT, PROCÉDÉ DE MONTAGE D'UN DISPOSITIF DE RACCORDEMENT ET UTILISATION D'UNE POMPE

(30) Priorität: 13.07.2022 DE 102022117461
(43) Veröffentlichungstag der Anmeldung: 26.02.2025
(62) Teilanmeldung aus: 23172528.4
(73) Patentinhaber: AL-KO Geräte GmbH, 89359 Kötz (DE)
(72) Erfinder: Volk, Martin, 89291 Holzheim (DE); Stricker, Herbert, 89364 Rettenbach (DE)
(74) Vertreter: Dr. Binder & Binder GbR

(56) Entgegenhaltungen:
- EP-A1- 3 236 128
- DE-A1- 102013 102 252
- GB-A- 1 007 203
- JP-A- H10 185 038
- JP-B2- 3 593 228
- KR-A- 20140 029 719
- US-A1- 2006 231 561

## Beschreibung

Die Erfindung betrifft eine Anschlusseinrichtung für eine Pumpe mit einem Pumpenkörper mit einer Auslassöffnung und einer Einlassöffnung, zumindest aufweisend einen ersten Anschlussabschnitt mit einem ersten Ende und einem zweiten Ende, wobei das erste Ende an die Auslassöffnung anschließbar ist, einen zweiten Anschlussabschnitt mit einem ersten Ende und einem zweiten Ende, wobei das erste Ende des zweiten Anschlussabschnittes in einem angeschlossenen Zustand der Anschlusseinrichtung mit dem zweiten Ende des ersten Anschlussabschnittes verbunden ist und das zweite Ende des zweiten Anschlussabschnittes mit einer Flüssigkeitsleitung verbindbar ist, und ein elastisches Verbindeelement zum Verbinden des ersten Endes des zweiten Anschlussabschnittes mit dem zweiten Ende des ersten Anschlussabschnittes, wobei in einem betätigten Zustand des Verbindeelementes die Verbindung der Anschlussabschnitte lösbar ist, wobei das elastische Verbindeelement als in sich geschlossene Manschette ausgebildet ist, welche auf der radialen Innenseite mindestens zwei, sich radial gegenüberliegende Vorsprünge aufweist, welche im angeschlossenen Zustand der Anschlussabschnitte durch zwei Öffnungen im Bereich des ersten Endes des zweiten Anschlussabschnittes in eine Nut im Bereich des zweiten Endes des ersten Anschlussabschnittes eingreifen.

Weiter betrifft die Erfindung ein Verfahren zur Montage einer Anschlusseinrichtung an eine Pumpe, sowie eine Verwendung einer Pumpe.

Es ist bekannt und allgemein üblich, an die Auslassöffnung von Pumpen einen Schlauch oder dergleichen anzuschließen. Das Anschließen erfolgt in der Regel über einen Adapter und erfordert eine beidhändige Bedienung.

Üblicherweise wird die Verbindung eines Schlauches an eine Tauchpumpe mit einer horizontalen Auslassöffnung derart ausgeführt, dass über einen Anschlussnippel in Verbindung mit einem Winkelstück das Fördermedium, also beispielsweise Wasser, nach oben befördert wird. Die Anschlüsse sind in der Regel mit Schraubgewinden versehen. Durch Einschrauben der Verbindungsstücke werden Pumpe, Schlauch und Stromanschlusskabel der Pumpe zueinander verdreht. Problematisch ist, dass aufgrund von Gewindesteigungen und verschiedenen Toleranzen die Schraubverbindung nicht gleichzeitig eine genaue Verbindung in vertikaler Position und eine gute Abdichtung ausbilden kann. Weiterhin ist das Verdrehen des Schlauches und des Stromanschlusskabels der Pumpe äußerst hinderlich in der Anwendung.

Um ein umständliches Entwirren von Schlauch und Stromanschlusskabel zu verhindern, gibt es Anschlüsse mittels Klemmverbindungen. Diese Klemmverbindungen können jedoch nur mittels beidhändiger Bedienung und unter Zuhilfenahme von Werkzeug gelöst beziehungsweise geschlossen werden.

Beispielhaft ist aus der Druckschrift EP 3 875 825 A1 ein Verbinder für eine Pumpe bekannt, bestehend aus einem ersten Verbindeabschnitt, der an die Auslassöffnung angeschlossen werden kann, und einem zweiten Verbindeabschnitt, an den ein Schlauch angeschlossen werden kann, wobei die beiden Verbindeabschnitte mittels eines klammerartigen Verbindemechanismus miteinander verbunden werden können.

Die Druckschriften JP H10 185038 A, KR 2014 0029719 A, EP 3 236 128 A1 und GB 1 007 203 A zeigen eine gattungsgemäße Anschlusseinrichtung für eine Pumpe mit den Merkmalen des Oberbegriffs des Anspruchs 1.

Als weiteren Stand der Technik wird auf die Druckschriften US 2006/231561 A1 und DE 10 2013 102252 A1 verwiesen.

Es ist Aufgabe der Erfindung, eine alternative Anschlusseinrichtung für eine Pumpe, sowie ein Montageverfahren und eine Pumpe hierfür bereitzustellen.

Diese Aufgabe wird durch die Merkmale der unabhängigen Patentansprüche gelöst. Vorteilhafte Weiterbildungen der Erfindung sind Gegenstand untergeordneter Ansprüche.

Die Erfinder haben eine alternative Anschlusseinrichtung für eine Pumpe entwickelt, welche ohne Verdrehen einfach befestigt werden kann. Zusätzlich kann die erfindungsgemäße Anschlusseinrichtung einhändig und werkzeuglos montiert werden, da diese selbstständig verriegelt.

Demgemäß schlagen die Erfinder vor, eine Anschlusseinrichtung für eine Pumpe mit einem Pumpenkörper mit einer Auslassöffnung und einer Einlassöffnung, zumindest aufweisend einen ersten Anschlussabschnitt mit einem ersten Ende und einem zweiten Ende, wobei das erste Ende an die Auslassöffnung anschließbar ist, einen zweiten Anschlussabschnitt mit einem ersten Ende und einem zweiten Ende, wobei das erste Ende des zweiten Anschlussabschnittes in einem angeschlossenen Zustand der Anschlusseinrichtung mit dem zweiten Ende des ersten Anschlussabschnittes verbunden ist und das zweite Ende des zweiten Anschlussabschnittes mit einer Flüssigkeitsleitung verbindbar ist, und ein elastisches Verbindeelement zum Verbinden des ersten Endes des zweiten Anschlussabschnittes mit dem zweiten Ende des ersten Anschlussabschnittes, wobei in einem betätigten Zustand des Verbindeelementes die Verbindung der Anschlussabschnitte lösbar ist, wobei das elastische Verbindeelement als in sich geschlossene Manschette ausgebildet ist, welche auf der radialen Innenseite mindestens zwei, sich radial gegenüberliegende Vorsprünge aufweist, welche im angeschlossenen Zustand der Anschlussabschnitte durch zwei Öffnungen im Bereich des ersten Endes des zweiten Anschlussabschnittes in eine Nut im Bereich des zweiten Endes des ersten Anschlussabschnittes eingreifen, dahingehend zu verbessern, dass das Verbindeelement zwei Betätigungsstellen aufweist, an welcher das Verbindeelement zum Lösen und Herstellen der Verbindung der beiden Anschlussabschnitte zumindest teilweise zusammendrückbar ist, wobei Anschlagmittel ausgebildet sind, welche eine Zentrierung des Verbindeelementes beim Zusammendrücken bewirken, wobei die Anschlagmittel als in axialer Richtung abstehende Laschen an den Betätigungsstellen ausgebildet sind, welche beim Zusammendrücken des Verbindeelementes an einen umlaufenden Flansch, der im Bereich des ersten Endes des zweiten Anschlussabschnittes ausgebildet ist, anschlagen.

Eine derartige Anschlusseinrichtung ist vorteilhafterweise einhändig und werkzeuglos bedienbar. Ein Verdrehen der Bauteile, also Pumpe, Anschlusseinrichtung, Flüssigkeitsleitung etc. ist nicht notwendig. Die Pumpe kann bei der Montage einfach an ihrem Standort verbleiben und muss insbesondere nicht angehoben werden. Bei der Pumpe handelt es sich beispielsweise um eine Tauch-, Teich- oder Gartenpumpe, um ein Hauswasserwerk, Whirlpoolpumpe oder Umwälzpumpe etc.

Der erste Anschlussabschnitt ist vorzugsweise winkelig, besonders günstig als 90°-Winkelstück, ausgebildet und kann an die Auslassöffnung angeschlossen werden. An den zweiten Anschlussabschnitt kann eine Flüssigkeitsleitung, beispielsweise ein Schlauch oder eine Rohrleitung, angeschlossen werden.

Vorzugsweise ist der zweite Anschlussabschnitt gerade ausgebildet. So kann ermöglicht werden, dass an eine Pumpe mit einer horizontal ausgeführten Auslassöffnung ein Schlauch in vertikaler Richtung angeschlossen werden kann.

Die Anschlussabschnitte sind vorteilhafterweise jeweils einteilig beziehungsweise einstückig ausgebildet, um jegliche undichte Stellen oder aufwändiges Abdichten der Anschlussabschnitte selbst zu vermeiden. In anderen Ausführungsformen können die Anschlussabschnitte jedoch auch mehrteilig beziehungsweise mehrstückig ausgebildet sein. Vorteilhafterweise sind zumindest der Bereich des ersten Endes des ersten Anschlussabschnittes und der Bereich des zweiten Endes des zweiten Anschlussabschnittes in Form von herkömmlichen Schlauchstutzen beziehungsweise Schlauchtüllen mit geriffeltem beziehungsweise gerippten Ende ausgeführt, um eine zuverlässige und dichte Verbindung an die Anschlussöffnung beziehungsweise zu einer Flüssigkeitsleitung zu gewährleisten.

Die beiden Anschlussabschnitte werden über das Verbindeelement miteinander verbunden. Im Folgenden wird daher unter verbundenem oder angeschlossenem Zustand verstanden, dass die beiden Anschlussabschnitte mittels des Verbindeelementes miteinander verbunden sind. Das erfindungsgemäße Verbindeelement ist elastisch und als in sich geschlossene Manschette ausgebildet. Die Manschette ist bevorzugt einteilig ausgebildet. Alternative Ausführungsformen sehen jedoch eine mehrteilige Manschette vor. Auf der radialen Innenseite der Manschette sind mindestens zwei, sich radial gegenüberliegende Vorsprünge ausgebildet. Eine bevorzugte Ausführungsform sieht zwei, sich radial gegenüberliegende Vorsprünge vor. In anderen Ausführungsformen ist vorteilhafterweise eine gerade Anzahl an Vorsprüngen ausgebildet, die sich jeweils paarweise gegenüberliegen. Ausführungsformen mit einer ungeraden Anzahl an Vorsprüngen sind ebenfalls möglich, wobei ein Vorsprung entsprechend kein Gegenüber hat.

Im angeschlossenen Zustand der Anschlussabschnitte ist das erste Ende des zweiten Anschlussabschnittes vorteilhafterweise über das zweite Ende des ersten Anschlussabschnittes gestülpt. Die Vorsprünge ragen durch zwei Öffnungen im Bereich des ersten Endes des zweiten Anschlussabschnittes hindurch und hinein in eine Nut im Bereich des zweiten Endes des ersten Anschlussabschnittes. Bevorzugt sind die Öffnungen ebenfalls radial gegenüberliegend angeordnet. Durch diesen Eingriff der Vorsprünge durch die Öffnungen in die Nut sind die beiden Anschlussabschnitte miteinander verbunden.

Es ist ebenso möglich und liegt im Rahmen der Erfindung, dass die Anschlussabschnitte im angeschlossenen Zustand andersrum angeordnet sind, dass also das zweite Ende des ersten Anschlussabschnittes über das erste Ende des zweiten Anschlussabschnittes gestülpt ist.

Im Folgenden wird unter dem Begriff Überlappungsbereich der Bereich der Anschlussabschnitte verstanden, in dem die jeweiligen Enden übereinander gestülpt sind, also die Enden überlappen.

Zum Lösen der Verbindung der Anschlussabschnitte und zum Herstellen der Verbindung wird erfindungsgemäß das Verbindeelement betätigt. Dies erfolgt vorzugsweise über ein einhändiges Zusammendrücken des elastischen Verbindeelementes. Im Folgenden wird daher unter betätigten Zustand verstanden, dass das Verbindeelement betätigt ist, sodass die Verbindung offen ist und die Anschlussabschnitte voneinander gelöst werden können beziehungsweise die Verbindung erzeugt werden kann. Im nicht-betätigten Zustand des Verbindeelementes ist die Verbindung der Anschlussabschnitte geschlossen und kann nicht gelöst werden.

Die Vorsprünge an dem Verbindeelement können unterschiedlich ausgeführt und geformt sein, beispielsweise symmetrisch oder asymmetrisch, mit oder ohne Hinterschneidungen. Eine Ausführungsform sieht daher vor, dass die Vorsprünge in Umfangsrichtung des Verbindeelementes betrachtet an mindestens einer Seite eine Hinterschneidung aufweisen. Entscheidend ist jedoch, dass die Größe der Öffnungen an dem zweiten Anschlussabschnitt ungefähr gleich der Größe der Vorsprünge ist, sodass die Vorsprünge im verbundenen Zustand durch die Öffnungen hindurchgreifen können.

Weiterhin ist bevorzugt die Nut am ersten Anschlussabschnitt in Umfangsrichtung durchgehend ausgebildet. So können die Vorsprünge sich im verbundenen Zustand in der Nut entlang des Umfangs des Anschlussabschnittes bewegen. Das heißt, der zweite Anschlussabschnitt ist im verbundenen Zustand relativ zu dem ersten Anschlussabschnitt verdrehbar. Die Relativbewegung der Anschlussabschnitte erfolgt dabei ohne Lösen der Anschlussabschnitte.

Um eine zuverlässige Verbindung der Anschlussabschnitte zu gewährleisten, ist die Verbindung vorteilhafterweise abgedichtet, sodass ein durch die Anschlussabschnitte hindurchfließendes Medium wie zum Beispiel Wasser oder andere Flüssigkeiten nicht nach außen tritt. Entsprechend liegt in einer bevorzugten Ausführungsform der Anschlusseinrichtung im Überlappungsbereich der Anschlussabschnitte eine Dichtung vor, welche die Verbindung der Anschlussabschnitte im angeschlossenen Zustand abdichtet.

Diese Dichtung kann auf verschiedene Arten realisiert werden. Beispielsweise ist am ersten Anschlussabschnitt im Bereich des zweiten Endes eine zweite Nut ausgebildet, in der ein Dichtmittel eingebracht ist, wobei die zweite Nut weiter zum Rand des zweiten Endes hin angeordnet ist als die erste Nut. Bei dem Dichtmittel handelt es sich bevorzugt um einen O-Ring oder dergleichen.

Ebenso kann zumindest das zweite Ende des ersten Anschlussabschnittes und/oder das erste Ende des zweiten Anschlussabschnittes teilweise elastisch ausgebildet sein, sodass die Anschlussabschnitte im Überlappungsbereich aneinandergedrückt werden. Besonders im Betrieb der Pumpe wird das innenliegende Ende durch den Druck des geförderten Mediums nach außen gegen das aufgestülpte Ende gedrückt und so der Überlappungsbereich abgedichtet.

Für eine anwenderfreundliche Ausführung der Anschlusseinrichtung weist das Verbindeelement zwei Betätigungsstellen auf, an welchen es zum Lösen und Herstellen der Verbindung der beiden Anschlussabschnitte zumindest teilweise zusammengedrückt werden kann. Vorzugsweise sind die Betätigungsstellen als gegenüberliegend angeordnet ausgebildet. So kann bei einer Einhandbedienung das Verbindeelement beispielsweise mit Daumen und Zeigefinger einer Hand betätigt, also zusammengedrückt, werden. Eine besonders bevorzugte Ausführungsform sieht vor, dass die Betätigungsstellen als sich radial gegenüberliegende Betätigungsstellen ausgebildet sind, wobei beim Zusammendrücken auf die Betätigungsstellen jeweils eine Kraft in radialer Richtung von außen nach innen ausgeübt wird. Beim Zusammendrücken verformt sich das Verbindeelement zumindest teilweise. Im nicht-betätigten Zustand, also ohne Zusammendrücken beziehungsweise beim Loslassen, kehrt es in seine ursprüngliche Form zurück beziehungsweise verbleibt so. Beispielsweise verformt sich das Verbindeelement beim Zusammendrücken von elliptisch zu rund oder von rund zu elliptisch.

Für eine alternative Art und Weise der Betätigung des Verbindeelementes zum Lösen der Verbindung der Anschlussabschnitte ist mindestens eine Betätigungsstelle derart ausgebildet, dass das Verbindeelement in Umfangsrichtung gedreht wird, um die Vorsprünge aus den Öffnungen zu lösen.

Beispielsweise ist die mindestens eine Betätigungsstelle in einer der nachfolgend aufgezählten Formen ausgebildet: Vertiefung, Delle, Einbuchtung, Wölbung und/oder Flügel. Vorteilhaft ist es zudem, wenn an den Betätigungsstellen zum besseren Greifen beziehungsweise zur einfacheren Handhabung ein Griffprofil, also zum Beispiel Noppen, Rillen, Gummierung oder dergleichen, ausgebildet ist.

Eine bevorzugte Ausführungsform des Verbindeelementes sieht zwei Betätigungsstellen vor, die entlang des Umfangs abwechselnd mit den Vorsprüngen angeordnet sind, wobei die Vorsprünge an der radialen Innenseite und die Betätigungsstellen auf die radiale Außenseite zeigend ausgebildet sind. Die Betätigungsstellen und die Vorsprünge sind in Umfangsrichtung betrachtet bevorzugt abwechselnd und um jeweils 90° versetzt angeordnet.

Erfindungsgemäß sind Anschlagmittel ausgebildet, welche eine Zentrierung des Verbindeelementes beim Zusammendrücken bewirken. Das heißt, die Anschlagmittel gewährleisten ein gleichmäßiges Zusammendrücken des Verbindeelementes auf beiden Seiten. Die Anschlagmittel können an einem umlaufenden Flansch im Bereich des ersten Endes des zweiten Anschlussabschnittes ausgebildet sein. Um dem Verbindeelement im betätigten Zustand ausreichend Spielraum zum Zusammendrücken zu geben, weist der Flansch vorteilhafterweise zwei gegenüberliegend angeordnete Vertiefungen auf. Die Vertiefungen sind weiterhin vorteilhaft im Bereich der Betätigungsstellen ausgebildet.

Erfindungsgemäß sind die Anschlagmittel als in achsialer Richtung abstehende Laschen an den Betätigungsstellen ausgebildet, welche beim Zusammendrücken des Verbindeelementes an den Flansch des zweiten Anschlussabschnittes anschlagen. Die Laschen stehen in achsialer Richtung vom Verbindeelement ab. Die Laschen sind vorzugsweise einteilig beziehungsweise einstückig mit dem Verbindeelement ausgeführt. **In** einer anderen Ausführungsform sind die Laschen und das Verbindeelement mehrteilig ausgebildet, indem die Laschen beispielsweise an das Verbindeelement aufgesetzt, aufgesteckt, angeklebt, angeschweißt oder dergleichen sind.

Bevorzugt sind die Betätigungsstellen im Bereich der Vertiefungen im Flansch positioniert, sodass die Vertiefungen beim Zusammendrücken als Anschlag für die Laschen dienen und so das Zusammendrücken des Verbindeelementes begrenzt wird. Das Verbindeelement kann vorteilhafterweise lediglich so weit verformt und zusammengedrückt werden wie die Vertiefungen tief sind.

Es gibt verschiedene mögliche Formen für das Verbindeelement, beispielsweise: rund, oval, elliptisch, eckig, gewellt. Ein rundes Verbindeelement wird beim Zusammendrücken elliptisch. Ein elliptisches Verbindeelement wird beim Zusammendrücken entweder schmäler oder rund. Bei einer elliptischen Ausführungsform sind die Betätigungsstellen vorzugsweise an den spitzen Enden und die Vorsprünge an den flachen Seiten des Verbindeelementes angeordnet, sodass ein elliptische Verbindeelement beim Zusammendrücken bevorzugt rund wird.

Bei der Montage der Anschlusseinrichtung wird vorteilhafterweise das Verbindeelement zunächst auf das erste Ende des zweiten Anschlussstückes aufgesetzt und dann erst die Verbindung der Anschlussabschnitte hergestellt, indem der zweite Anschlussabschnitt auf den ersten Anschlussabschnitt gestülpt wird. Günstigerweise sind am Rand des ersten Endes des zweiten Anschlussabschnittes zwei Ausnehmungen ausgebildet, welche zur leichteren Montage des Verbindeelementes auf den zweiten Anschlussabschnitt dienen. Beim Aufsetzen des Verbindeelementes auf den zweiten Anschlussabschnitt rutschen die Vorsprünge auf der Innenseite des Verbindeelementes durch die Ausnehmungen durch. Vorteilhafterweise ist es daher nicht notwendig, das Verbindeelement weiter zusammenzudrücken als durch die Anschlagmittel möglich ist.

Die Erfindung betrifft auch ein Verfahren zur Montage einer erfindungsgemäßen, voranstehend beschriebenen Anschlusseinrichtung an eine Pumpe, zumindest aufweisend die folgenden Schritte:
- Aufsetzen des Verbindeelementes auf das erste Ende des zweiten Anschlussabschnittes, sodass die Vorsprünge in die Öffnungen eingreifen, indem
   die Vorsprünge des Verbindeelementes in den Ausnehmungen am Rand des zweiten Anschlussabschnittes platziert werden und dann das Verbindeelement an den Betätigungsstellen zusammengedrückt wird, sodass zuerst ein Vorsprung in eine Öffnung eingeschoben und dann mittels einer Kippbewegung der andere Vorsprung in die andere Öffnung eingeschoben werden kann,
- Verbinden des ersten Endes des zweiten Anschlussabschnittes mit dem zweiten Ende des ersten Anschlussabschnittes, indem das Verbindeelement an den Betätigungsstellen erneut zusammengedrückt wird, sodass die Vorsprünge zumindest teilweise in die Öffnungen zurückgezogen werden und das erste Ende des zweiten Anschlussabschnittes über das zweite Ende des ersten Anschlussabschnittes gestülpt werden kann, und
- Loslassen des Verbindeelementes, sodass im nicht-betätigten Zustand die Vorsprünge durch die Öffnungen in die Nut am zweiten Ende des ersten Anschlussabschnittes eingreifen und die Verbindung der Anschlussabschnitte geschlossen ist.

Die voranstehend beschriebenen Schritte werden bevorzugt in der angegebenen Reihenfolge ausgeführt.

Das erste Ende des ersten Anschlussabschnittes kann zudem, entweder vor oder nach dem Verbinden der Anschlussabschnitte, an die Auslassöffnung der Pumpe angeschlossen werden. An das zweite Ende des zweiten Anschlussabschnittes kann ein Schlauch oder dergleichen angeschlossen werden.

Im nicht-betätigten Zustand des Verbindeelementes ragen vorteilhafterweise im verbundenen Zustand der Anschlussabschnitte die Vorsprünge durch die Öffnungen hindurch und in die Nut hinein, sodass die Verbindung zwischen den Anschlussabschnitten geschlossen ist.

Im betätigten Zustand des Verbindeelementes ziehen sich die Vorsprünge vorteilhafterweise in die Öffnungen zumindest teilweise zurück, sodass die Vorsprünge nicht mehr in die Nut hineinragen und die Verbindung zwischen den Anschlussabschnitten gelöst werden kann.

Beim Betätigen wird das Verbindungselement vorteilhafterweise in radialer Richtung zusammengedrückt. Bei einer elliptischen Ausführungsform des Verbindeelementes, bei der die Betätigungsstellen an den spitzen Enden und die Vorsprünge an den flachen Seiten angeordnet sind, nähern sich die Betätigungsstellen beim Zusammendrücken an, wobei das Verbindeelement rund wird, während die Vorsprünge sich voneinander entfernen und dabei aus der Nut heraus bewegt werden.

Noch weiter betrifft die Erfindung eine Verwendung einer Pumpe mit einer erfindungsgemäßen, voranstehend beschriebenen Anschlusseinrichtung, wobei die Pumpe als Tauch-, Teich- oder Gartenpumpe, Hauswasserwerk, Whirlpoolpumpe oder Umwälzpumpe oder dergleichen ausgebildet ist.

Im Folgenden wird die Erfindung anhand eines bevorzugten Ausführungsbeispiels mit Hilfe der Figuren näher beschrieben, wobei nur die zum Verständnis der Erfindung notwendigen Merkmale dargestellt sind.

Es zeigen im Einzelnen:
- FIG 1:: eine Perspektivansicht einer Anschlusseinrichtung im verbundenen Zustand in einer ersten nicht-erfindungsgemäßen Ausführungsform,
- FIG 2:: eine Explosionsdarstellung der Anschlusseinrichtung gemäß der Figur 1,
- FIG 3:: eine Perspektivansicht des zweiten Anschlussabschnittes gemäß der Figur 1,
- FIG 4:: eine Querschnittansicht der Anschlusseinrichtung gemäß der Figur 1 im betätigten Zustand,
- FIG 5:: eine erste Längsquerschnittansicht der Anschlusseinrichtung gemäß der Figur 1 im betätigten Zustand,
- FIG 6:: eine zweite Längsquerschnittansicht der Anschlusseinrichtung gemäß der Figur 1 im betätigten Zustand,
- FIG 7:: eine Querschnittansicht der Anschlusseinrichtung gemäß der Figur 1 im nicht-betätigten Zustand,
- FIG 8:: eine erste Längsquerschnittansicht der Anschlusseinrichtung gemäß der Figur 1 im nicht-betätigten Zustand,
- FIG 9:: eine zweite Längsquerschnittansicht der Anschlusseinrichtung gemäß der Figur 1 im betätigten Zustand,
- FIG 10:: eine Perspektivansicht einer Anschlusseinrichtung im verbundenen Zustand in einer zweiten nicht-erfindungsgemäßen Ausführungsform,
- FIG 11:: eine Explosionsdarstellung der Anschlusseinrichtung gemäß der Figur 10,
- FIG 12:: eine Perspektivansicht des zweiten Anschlussabschnittes gemäß der Figur 10,
- FIG 13:: eine Querschnittansicht der Anschlusseinrichtung gemäß der Figur 10 im betätigten Zustand,
- FIG 14:: eine erste Längsquerschnittansicht der Anschlusseinrichtung gemäß der Figur 10 im betätigten Zustand,
- FIG 15:: eine zweite Längsquerschnittansicht der Anschlusseinrichtung gemäß der Figur 10 im betätigten Zustand,
- FIG 16:: eine Querschnittansicht der Anschlusseinrichtung gemäß der Figur 10 im nicht-betätigten Zustand,
- FIG 17:: eine erste Längsquerschnittansicht der Anschlusseinrichtung gemäß der Figur 10 im nicht-betätigten Zustand,
- FIG 18:: eine zweite Längsquerschnittansicht der Anschlusseinrichtung gemäß der Figur 10 im betätigten Zustand,
- FIG 19:: eine Perspektivansicht einer Anschlusseinrichtung im verbundenen Zustand in einer dritten, nun erfindungsgemäßen Ausführungsform,
- FIG 20:: eine Explosionsdarstellung der Anschlusseinrichtung gemäß der Figur 19,
- FIG 21:: eine Perspektivansicht des Verbindeelementes gemäß der Figur 19,
- FIG 22:: eine Querschnittansicht der Anschlusseinrichtung gemäß der Figur 19 im betätigten Zustand,
- FIG 23:: eine erste Längsquerschnittansicht der Anschlusseinrichtung gemäß der Figur 19 im betätigten Zustand,
- FIG 24:: eine zweite Längsquerschnittansicht der Anschlusseinrichtung gemäß der Figur 19 im betätigten Zustand,
- FIG 25:: eine Querschnittansicht der Anschlusseinrichtung gemäß der Figur 19 im nicht-betätigten Zustand,
- FIG 26:: eine erste Längsquerschnittansicht der Anschlusseinrichtung gemäß der Figur 19 im nicht-betätigten Zustand,
- FIG 27:: eine zweite Längsquerschnittansicht der Anschlusseinrichtung gemäß der Figur 19 im betätigten Zustand, und
- FIG 28 - 33:: Perspektivansichten des Verbindeelementes in verschiedenen Ausführungsformen.

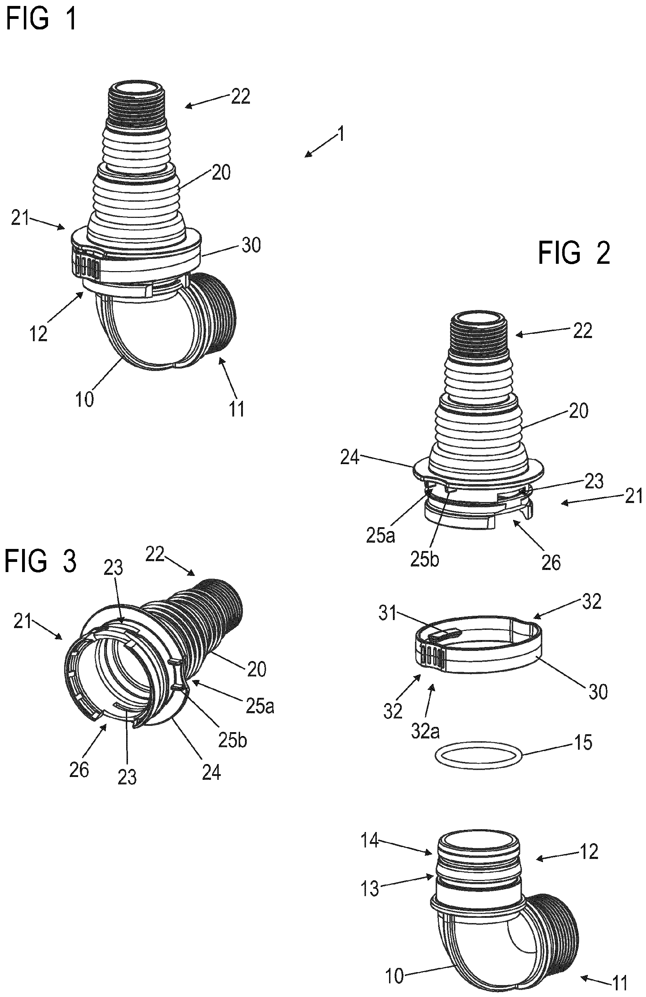

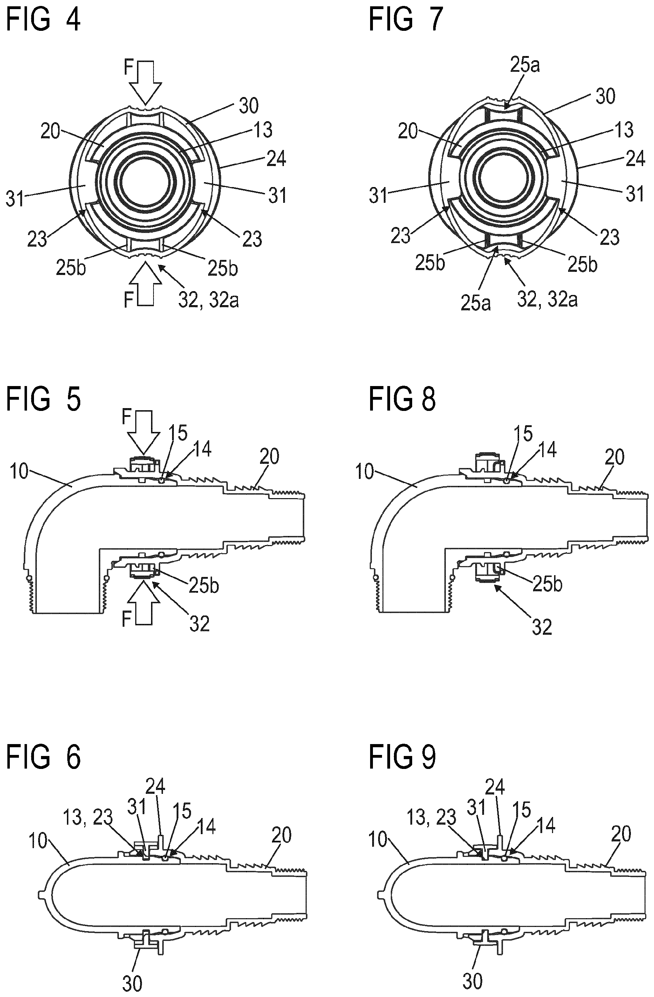

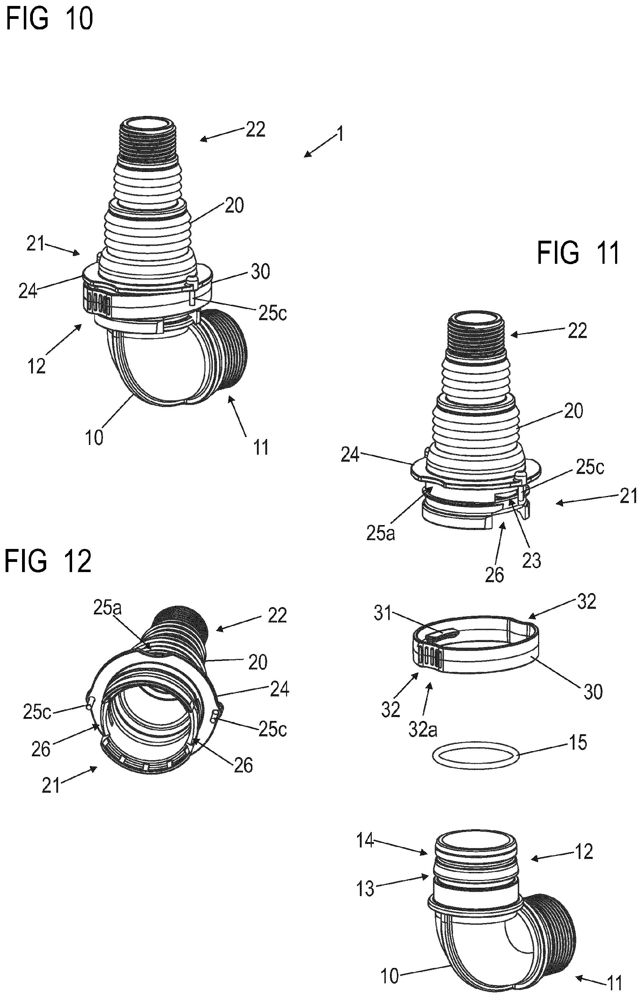

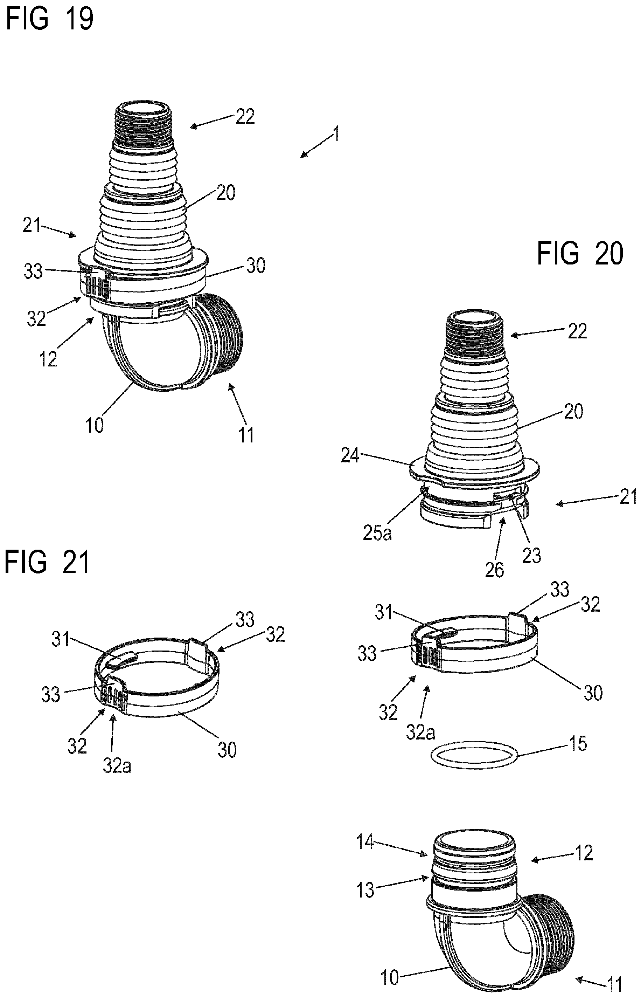

Es beziehen sich jeweils die Figuren 1 bis 9 auf die Anschlusseinrichtung 1 in einer ersten Ausführungsform gemäß der Figur 1, die Figuren 10 bis 18 auf die Anschlusseinrichtung 1 in einer zweiten Ausführungsform gemäß der Figur 10 und die Figuren 19 bis 27 auf die Anschlusseinrichtung 1 in einer dritten Ausführungsform gemäß der Figur 19. Weiterhin zeigen auf den geraden Seiten die Figuren in der linken Spalte, also Figuren 4 bis 6, 13 bis 15 und 22 bis 24, jeweils die Anschlusseinrichtung 1 im betätigten Zustand des Verbindeelementes, während die Figuren in der rechten Spalte, also Figuren 7 bis 9, 16 bis 18 und 25 bis 27, jeweils die Anschlusseinrichtung 1 im nicht-betätigten Zustand des Verbindeelementes zeigen.

Gleiche Bauteile sind mit gleichen Bezugszeichen gekennzeichnet. Es werden im Folgenden lediglich die erfindungswesentlichen Merkmale beschrieben.

Die **Figur 1** zeigt eine Perspektivansicht einer Anschlusseinrichtung 1 im verbundenen Zustand in einer ersten Ausführungsform. Die Anschlusseinrichtung 1 dient zum Anschließen eines Schlauches an eine Pumpe und kann einhändig, ohne gegeneinander Verdrehen der Bauteile bedient werden.

Die Anschlusseinrichtung 1 umfasst zwei rohrartige Anschlussabschnitte 10, 20, nämlich einen ersten Anschlussabschnitt 10 mit einem ersten Ende 11 und einem zweiten Ende 12, welcher als rechtwinkeliges Winkelstück ausgebildet ist und an die Auslassöffnung der Pumpe angeschlossen werden kann, und einen zweiten Anschlussabschnitt 20 mit einem ersten Ende 21 und einem zweiten Ende 22 zum Anschließen eines Schlauches. Im hier gezeigten verbundenen Zustand ist das erste Ende 21 des zweiten Anschlussabschnittes 20 über das zweite Ende 12 des ersten Anschlussabschnittes 10 gestülpt. Zudem umfasst die Anschlusseinrichtung 1 noch ein Verbindeelement 30, welches die Verbindung der Anschlussabschnitte 10, 20 herstellt. Das Verbindeelement 30 ist außen um den Überlappungsbereich der Anschlussabschnitte 10, 20 angeordnet.

Die **Figur 2** zeigt die Anschlusseinrichtung 1 gemäß der Figur 1 in einer Explosionsdarstellung. Der erste Anschlussabschnitt 10 ist als einteiliges, rechtwinkeliges Winkelstück ausgebildet und weist ein erstes Ende 11 zum Anschließen an die Auslassöffnung einer Pumpe und ein zweites Ende 12 zum Verbinden mit dem zweiten Anschlussabschnitt 20 auf. Im Bereich des zweiten Endes 12 im Überlappungsbereich sind zwei voneinander beabstandete Nuten 13, 14 ausgebildet, die in Umfangsrichtung betrachtet durchgängig sind. In die erste Nut 13 greifen im verbundenen Zustand die Vorsprünge 31 des Verbindeelementes 30 ein. Die zweite Nut 14 ist näher am Rand des zweiten Endes 12 angeordnet als die erste Nut 13. In der zweiten Nut 15 ist ein O-Ring 15 aus Kunststoff zum Abdichten der Verbindung der beiden Anschlussabschnitte 10, 20 angeordnet.

Der zweite Anschlussabschnitt 20 ist gerade, ohne Winkel ausgebildet und weist ein erstes Ende 21 zum Verbinden mit dem ersten Anschlussabschnitt 10 und ein zweites Ende 22 zum Anschließen eines Schlauches auf. Im Bereich des ersten Endes 21 im Überlappungsbereich sind zwei gegenüberliegende Öffnungen 23 und am Rand des ersten Endes 21 zwei gegenüberliegende Ausnehmungen 26 ausgebildet. Die Öffnungen 23 und die Ausnehmungen 26 sind jeweils an der gleichen Umfangsposition angeordnet und liegen sich somit paarweise gegenüber. Durch die Öffnungen 23 ragen im verbundenen Zustand die Vorsprünge 31 des Verbindeelementes 30 hindurch, um weiterhin in die erste Nut 13 einzugreifen. Die Ausnehmungen 26 dienen zur einfacheren Montage des Verbindeelementes 30 auf den zweiten Anschlussabschnitt 20.

Weiterhin ist am ersten Ende 21 ein umlaufender Flansch 24 ausgebildet. Der Flansch 24 bildet hier die Grenze des Überlappungsbereiches am zweiten Ende 22. Der Flansch 24 weist zwei gegenüberliegende Vertiefungen 25a auf, wobei die Position der Vertiefungen 25a um jeweils 90° am Umfang verschoben ist relativ zu den Öffnungen 23 beziehungsweise Ausnehmungen 26. Die Vertiefungen 25a und die Öffnungen 23 beziehungsweise Ausnehmungen 26 sind sozusagen abwechselnd und benachbart zueinander angeordnet. Weiterhin sind an der zum Überlappungsbereich ausgerichteten Seite des Flansches 24 zwei gegenüberliegende Anschlagmittel angeordnet. Die Anschlagmittel sollen eine Zentrierung des Verbindeelementes 30 beim Zusammendrücken bewirken. In der hier gezeigten Ausführungsform sind die Anschlagmittel 25 als jeweils zwei, parallel ausgerichtete rippenartige Vorsprünge 25b ausgebildet, die im Bereich der Vertiefungen 25a angeordnet sind.

Das Verbindeelement 30 ist als elastische, einteilige Manschette ausgebildet und weist in der hier gezeigten Ausführungsform eine elliptische Form aus. An den flachen Seiten des elliptischen Verbindeelementes 30 sind innenliegend zwei Vorsprünge 31 ausgebildet, welche im verbundenen Zustand durch die Öffnungen 23 am zweiten Anschlussabschnitt 20 bis in die erste Nut 13 am ersten Anschlussabschnitt 10 hineinragen. Die Vorsprünge 31 sind in dieser Ausführungsform symmetrisch, annähernd rechteckig beziehungsweise leicht trapezförmig und ohne Hinterschneidungen ausgebildet. An den spitzen Enden des elliptischen Verbindeelementes 30 sind zwei Betätigungsstellen 32 in Form von Dellen beziehungsweise Vertiefungen 32a ausgebildet. In den Vertiefungen 32a sind rippenartige Griffprofile eingebracht, die eine sichere Handhabung durch den Benutzer gewährleisten.

Die **Figur 3** zeigt noch eine Perspektivansicht des zweiten Anschlussabschnittes 20 gemäß der Figur 1. In dieser Ansicht sind besonders gut die zwei gegenüberliegenden Öffnungen 23 und Ausnehmungen 26 sowie die ebenfalls gegenüberliegenden Vertiefungen 25a und die rippenartigen Vorsprünge 25b am Flansch 24 zu erkennen. Die Öffnungen 23 und Ausnehmungen 26 sind etwas breiter ausgebildet als die Vorsprünge 31 des Verbindeelementes 30.

Im Folgenden zeigen die Figuren 4 bis 6 verschiedene Ansichten der Anschlusseinrichtung 1 im betätigten Zustand des Verbindeelementes 30, während die Figuren 7 bis 9 die entsprechenden Ansichten der Anschlusseinrichtung 1 im nicht-betätigten Zustand des Verbindeelementes 30 zeigen.

Die **Figur 4** zeigt eine Querschnittansicht der Anschlusseinrichtung 1 gemäß der Figur 1 im betätigten Zustand. Die Betätigung der Anschlusseinrichtung 1 erfolgt einhändig, indem der Nutzer mit Daumen und Zeigefinger im Bereich der Betätigungsstellen 25 beziehungsweise Vertiefungen 32a eine radial nach innen ausgerichtete Kraft F auf das Verbindeelement 30 ausübt. Dabei werden die Betätigungsstellen 32 aufeinander zu bewegt und das Verbindeelement 30 zusammengedrückt, sodass sich dieses von elliptisch zu rund verformt. Das Zusammendrücken des Verbindeelementes 30 wird durch die Anschlagmittel begrenzt. Das Verbindeelement 30 kann nur soweit verformt beziehungsweise zusammengedrückt werden, bis die Rück- beziehungsweise Innenseite der Vertiefungen 32a an die rippenartigen Vorsprünge 25b im Bereich der Vertiefungen 25a am Flansch 24 anstoßen. Zudem wird so eine gleichmäßige Verformung des Verbindeelementes 30 gewährleistet.

Im hier gezeigten zusammengedrückten beziehungsweise geöffneten Zustand des Verbindeelementes 30 sind die Vorsprünge 31 zwar in den Öffnungen 23 des zweiten Anschlussabschnittes 20 positioniert, ragen jedoch nicht bis in die Nut 13 im ersten Anschlussabschnitt 10 hinein, sodass die Verbindung der beiden Anschlussabschnitte 10, 20 getrennt werden kann, also die Anschlussabschnitte 10, 20 voneinander abgezogen beziehungsweise aufeinander aufgesetzt werden können.

Die Figuren 5 und 6 zeigen zwei verschiedene Längsquerschnittansichten der Anschlusseinrichtung 1, nämlich die **Figur 5** einen Längsquerschnitt durch die Betätigungsstellen 32 des Verbindeelementes 30 und die **Figur 6** einen Längsquerschnitt durch die Vorsprünge 31 des Verbindeelementes 30. In der Figur 5 ist zu erkennen, dass das Verbindeelement 30 auf beiden Seiten bis zum Anschlag an den rippenartigen Vorsprüngen 25b zusammengedrückt ist. In der Figur 6 ist dahingegen zu erkennen, dass entsprechend des hier gezeigten geöffneten beziehungsweise betätigten Zustandes die Vorsprünge 31 nicht bis in die Nut 13 im ersten Anschlussabschnitt 10 hineinragen.

Die Ansichten der Figuren 7 bis 9 entsprechen den Ansichten der Figuren 4 bis 6, nämlich **Figur 7** eine Querschnittansicht der Anschlusseinrichtung 1, **Figur 8** einen Längsquerschnitt durch die Betätigungsstellen 32 des Verbindeelementes 30 und die **Figur 9** einen Längsquerschnitt durch die Vorsprünge 31 des Verbindeelementes 30. Daher wird zu den Figuren 7 bis 9 lediglich auf die Unterschiede im Hinblick auf den hier gezeigten nicht-betätigten beziehungsweise geschlossenen Zustand des Verbindeelementes 30 eingegangen.

Das Verbindeelement 30 ist in der ursprünglichen elliptischen Ausgangsform gezeigt. Zwischen den Betätigungsstellen 32 an den spitzen Enden und der Vertiefung 25a am Flansch 24 ist auf beiden Seiten ein Spielraum, welcher genau dem Maß entspricht, um welches sich das Verbindeelement 30 zusammendrücken und verformen lässt, siehe Figuren 7 und 8.

Ohne Krafteinwirkung und in der elliptischen Ausgangsform greifen die Vorsprünge 31 durch die Öffnungen 23 bis in die Nut 13 hinein. Die Anschlussabschnitte 10, 20 können nicht voneinander getrennt werden.

In den folgenden Figuren 10 bis 18 ist die Anschlusseinrichtung 1 in einer zweiten Ausführungsform gezeigt. Es wird lediglich auf die Unterschiede der Ausführungsformen eingegangen.

Die **Figur 10** zeigt eine Perspektivansicht und die **Figur 11** eine Explosionsdarstellung der Anschlusseinrichtung 1 im verbundenen Zustand in der zweiten Ausführungsform, während die **Figur 12** lediglich eine Perspektivansicht des zweiten Anschlussabschnittes 20 gemäß der Figur 10 zeigt. Die hier gezeigte zweite Ausführungsform unterscheidet sich von der ersten Ausführungsform in der Ausgestaltung des Anschlagmittels am Flansch 24. Das Anschlagmittel ist hier als zwei gegenüberliegende Anschlagstifte 25c ausgebildet. Die Anschlagstifte 25c ragen in Längsrichtung des zweiten Anschlussabschnittes 20 von dem Flansch 24 ab. Die Anschlagstifte 25c sind zwischen den Betätigungsstellen 32, also im Bereich der flachen Seiten des Verbindeelementes 30 positioniert. Durch die Anschlagstifte 25c wird die Verformung des Verbindeelementes 30 von elliptisch zu rund im betätigten Zustand begrenzt.

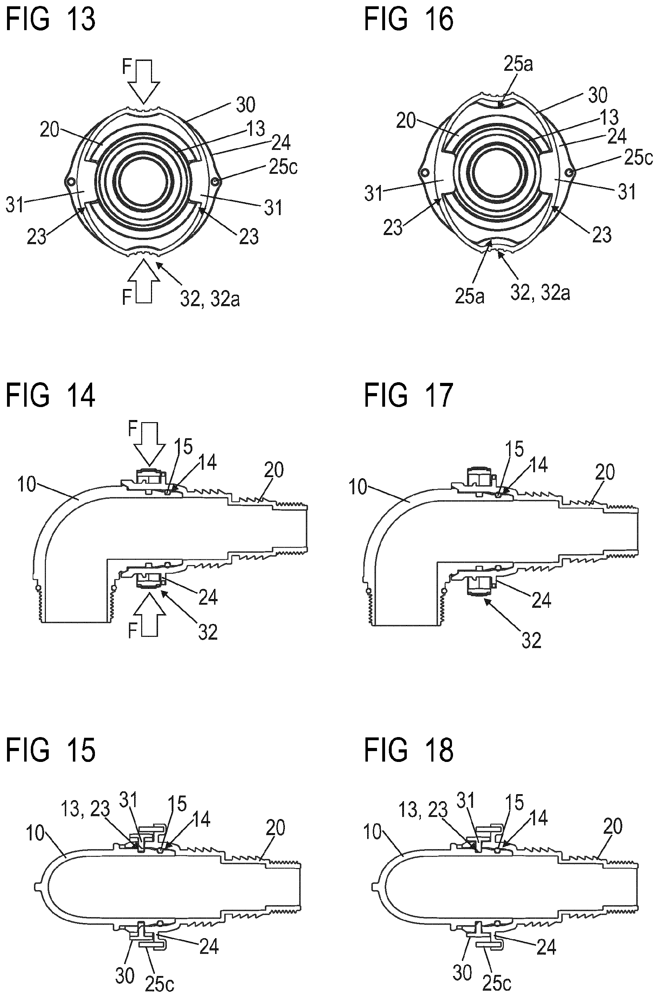

Verschiedene Ansichten der zweiten Ausführungsform der Anschlusseinrichtung 1 im betätigten Zustand zeigen die Figuren 13 bis 14, nämlich **Figur 13** eine Querschnittansicht der Anschlusseinrichtung 1, **Figur 14** einen Längsquerschnitt durch die Betätigungsstellen 32 des Verbindeelementes 30 und die **Figur 15** einen Längsquerschnitt durch die Vorsprünge 31 des Verbindeelementes 30. Das Verbindeelement 30 ist zusammengedrückt und rund. Die ehemals flachen, nun runden Außenseiten liegen an den Anschlagstiften 25c an, siehe Figuren 13 und 15.

Weiterhin zeigen die Figuren 16 bis 18 verschiedene Ansichten der zweiten Ausführungsform der Anschlusseinrichtung 1 im nicht-betätigten Zustand, nämlich **Figur 16** eine Querschnittansicht der Anschlusseinrichtung 1, **Figur 17** einen Längsquerschnitt durch die Betätigungsstellen 32 des Verbindeelementes 30 und die **Figur 18** einen Längsquerschnitt durch die Vorsprünge 31 des Verbindeelementes 30. Das Verbindeelement 30 ist in der elliptischen Ausgangsform gezeigt, siehe Figur 16. In den Figuren 16 und 17 ist der Spielraum zwischen Vertiefung 32a der Betätigungsstelle 32 und der Vertiefung 25a am Flansch 24 an den spitzen Enden des Verbindeelementes 30 zu erkennen. In der Figur 18 ist der Abstand zwischen den Anschlagstiften 25c und den flachen Seiten des Verbindeelementes 30 zu erkennen.

In den folgenden Figuren 19 bis 27 ist die Anschlusseinrichtung 1 in einer dritten Ausführungsform gezeigt. Es wird lediglich auf die Unterschiede der Ausführungsformen eingegangen.

Die **Figur 19** zeigt eine Perspektivansicht und die **Figur 20** eine Explosionsdarstellung der Anschlusseinrichtung 1 im verbundenen Zustand in der dritten Ausführungsform, während die **Figur 21** lediglich eine Perspektivansicht des zweiten Anschlussabschnittes 20 gemäß der Figur 19 zeigt. Die hier gezeigte dritte Ausführungsform unterscheidet sich von der ersten Ausführungsform in der Ausgestaltung des Anschlagmittels am Flansch 24 sowie in der Ausgestaltung des Verbindeelementes 30. Das Anschlagmittel ist hier als zusätzliche Lasche 33 an den Betätigungsstellen 32 des Verbindeelementes 30 ausgebildet, wobei die Laschen 33 im zusammengedrückten Zustand die Verformung des Verbindeelementes 30 begrenzen, sobald diese an den Vertiefungen 25a am Flansch 24 anschlagen.

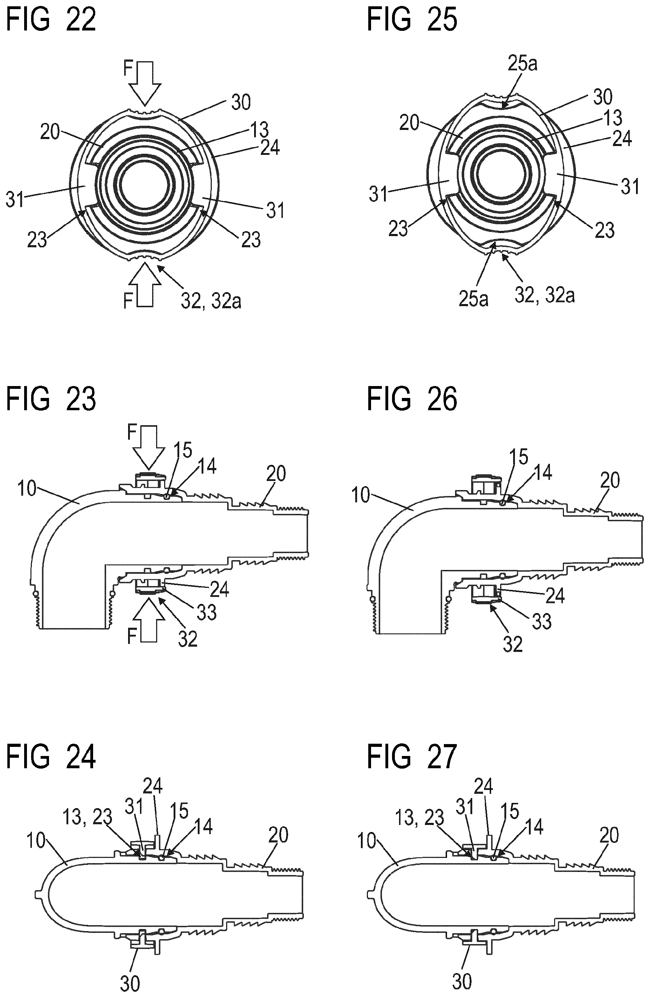

Verschiedene Ansichten der dritten Ausführungsform der Anschlusseinrichtung 1 im betätigten Zustand zeigen die Figuren 22 bis 23, nämlich **Figur 22** eine Querschnittansicht der Anschlusseinrichtung 1, **Figur 23** einen Längsquerschnitt durch die Betätigungsstellen 32 des Verbindeelementes 30 und die **Figur 24** einen Längsquerschnitt durch die Vorsprünge 31 des Verbindeelementes 30. Das Verbindeelement 30 ist zusammengedrückt und rund. Die Laschen 33 liegen an den Vertiefungen 25a am Flansch 24 an, siehe Figuren 22 und 23.

Weiterhin zeigen die Figuren 25 bis 27 verschiedene Ansichten der dritten Ausführungsform der Anschlusseinrichtung 1 im nicht-betätigten Zustand, nämlich **Figur 25** eine Querschnittansicht der Anschlusseinrichtung 1, **Figur 26** einen Längsquerschnitt durch die Betätigungsstellen 32 des Verbindeelementes 30 und die **Figur 27** einen Längsquerschnitt durch die Vorsprünge 31 des Verbindeelementes 30. In den Figuren 25 und 26 ist der Spielraum zwischen der Vertiefung 32a beziehungsweise der Lasche 33 der Betätigungsstelle 32 und der Vertiefung 25a am Flansch 24 an den spitzen Enden des Verbindeelementes 30 zu erkennen.

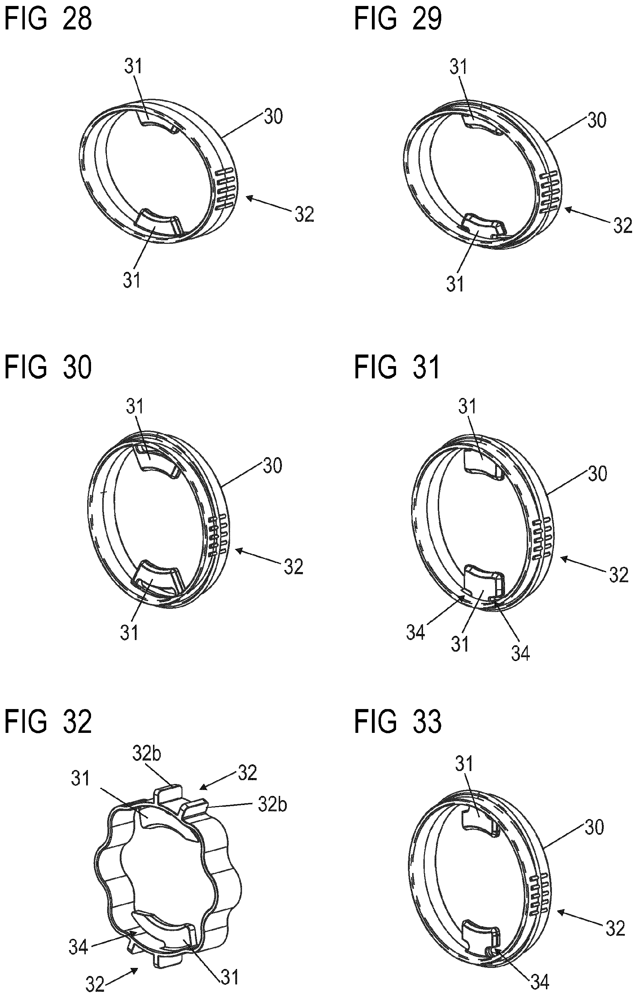

In den **Figuren 28 bis 33** sind noch verschiedene Perspektivansichten des Verbindeelementes 30 in verschiedenen Ausführungsformen gezeigt.

Die Figuren 28 und 29 zeigen ein elliptisches Verbindeelement 30, während die Figuren 30, 31 und 33 ein rundes Verbindeelement 30 zeigen. Das Verbindeelement 30 der Figur 32 ist wellenförmig ausgebildet.

Die Verbindeelemente 30 sind jeweils als einteilige Manschette mit zwei innen- und gegenüberliegenden Vorsprüngen 31 ausgebildet. Die Vorsprünge 31 mit Ausnahme der Figur 32 sind symmetrisch ausgebildet, wobei die Vorsprünge 31 der Figuren 29, 31 und 33 Hinterschneidungen 34 aufweisen, während die Vorsprünge 31 der Figur 28 hinterschneidungsfrei ausgebildet sind und die Vorsprünge 31 der Figur 30 Aussparungen 35 zum Materialsparen aufweisen.

Alle Verbindeelemente 30 weisen jeweils zwei gegenüberliegende Betätigungsstellen 32 auf. Gemäß der Figuren 28 bis 31 und 33 liegen die Betätigungsstellen 32 jeweils zwischen den Vorsprüngen 31 und weisen ein rillenförmiges Griffprofil auf. Bei den elliptischen Ausführungen der Figuren 28 und 29 sind die Betätigungsstellen 32 an den spitzen Enden angeordnet, während die Vorsprünge 31 an den flachen Seiten liegen.

Gemäß der Figur 32 sind die Betätigungsstellen 32 und die Vorsprünge 31 an den gleichen gegenüberliegenden Umfangspositionen angeordnet. Die Betätigungsstellen 32 sind jeweils als zwei abstehende Flügel 32b ausgebildet. Die Vorsprünge 31 sind nicht symmetrisch und weisen auf einer Seite jeweils entgegengesetzt ausgerichtete Hinterschneidungen 34 auf. Zum Lösen der Verbindung der Anschlussabschnitte 10, 20 wird bei dieser Ausführungsform das Verbindeelement in Umfangsrichtung gedreht, um die Vorsprünge 31 aus den Öffnungen 23 zu lösen

### Bezugszeichenliste

- 1: Anschlusseinrichtung
- 10: erster Anschlussabschnitt
- 11: erstes Ende des ersten Anschlussabschnittes
- 12: zweites Ende des ersten Anschlussabschnittes
- 13: erste Nut
- 14: zweite Nut
- 15: Dichtmittel / O-Ring

- 20: zweiter Anschlussabschnitt
- 21: erstes Ende des zweiten Anschlussabschnittes
- 22: zweites Ende des zweiten Anschlussabschnittes
- 23: Öffnungen
- 24: Flansch
- 25a: Vertiefungen am Flansch
- 25b: rippenartige Vorsprünge
- 25c: Anschlagstifte
- 26: Ausnehmungen

- 30: Verbindeelement / Manschette
- 31: Vorsprünge
- 32: Betätigungsstellen
- 32a: Vertiefungen
- 32b: Flügel
- 33: Laschen
- 34: Hinterschneidung
- 35: Aussparung

- F: Kraft

## Patentansprüche

1. Anschlusseinrichtung (1) für eine Pumpe mit einem Pumpenkörper mit einer Auslassöffnung und einer Einlassöffnung, zumindest aufweisend:
einen ersten Anschlussabschnitt (10) mit einem ersten Ende (11) und einem zweiten Ende (12), wobei das erste Ende (11) an die Auslassöffnung anschließbar ist,
einen zweiten Anschlussabschnitt (20) mit einem ersten Ende (21) und einem zweiten Ende (22), wobei das erste Ende (21) des zweiten Anschlussabschnittes (20) in einem angeschlossenen Zustand der Anschlusseinrichtung (1) mit dem zweiten Ende (12) des ersten Anschlussabschnittes (10) verbunden ist und das zweite Ende (22) des zweiten Anschlussabschnittes (20) mit einer Flüssigkeitsleitung verbindbar ist,
ein elastisches Verbindeelement (30) zum Verbinden des ersten Endes (21) des zweiten Anschlussabschnittes (20) mit dem zweiten Ende (12) des ersten Anschlussabschnittes (10), wobei in einem betätigten Zustand des Verbindeelementes (30) die Verbindung der Anschlussabschnitte (10, 20) lösbar ist, wobei
das elastische Verbindeelement (30) als in sich geschlossene Manschette ausgebildet ist, welche auf der radialen Innenseite mindestens zwei, sich radial gegenüberliegende Vorsprünge (31) aufweist, welche im angeschlossenen Zustand der Anschlussabschnitte (10, 20) durch zwei Öffnungen (23) im Bereich des ersten Endes (21) des zweiten Anschlussabschnittes (20) in eine Nut (13) im Bereich des zweiten Endes (12) des ersten Anschlussabschnittes (10) eingreifen,
**dadurch gekennzeichnet, dass**
das Verbindeelement (30) zwei Betätigungsstellen (32) aufweist, an welchen das Verbindeelement (30) zum Lösen und Herstellen der Verbindung der beiden Anschlussabschnitte (10, 20) zumindest teilweise zusammendrückbar ist,
wobei Anschlagmittel ausgebildet sind, welche eine Zentrierung des Verbindeelementes (30) beim Zusammendrücken bewirken, wobei die Anschlagmittel als in axialer Richtung abstehende Laschen (33) an den Betätigungsstellen (32) ausgebildet sind, welche beim Zusammendrücken des Verbindeelementes (30) an einen umlaufenden Flansch (24), der im Bereich des ersten Endes (21) des zweiten Anschlussabschnittes (20) ausgebildet ist, anschlagen.

2. Anschlusseinrichtung (1) gemäß dem voranstehenden Patentanspruch 1, **dadurch gekennzeichnet, dass** die Vorsprünge (31) in Umfangsrichtung des Verbindeelementes (30) betrachtet an mindestens einer Seite eine Hinterschneidung (34) aufweisen.

3. Anschlusseinrichtung (1) gemäß einem der voranstehenden Patentansprüche 1 bis 2, **dadurch gekennzeichnet, dass** die Nut (13) am ersten Anschlussabschnitt (10) in Umfangsrichtung durchgehend ausgebildet ist.

4. Anschlusseinrichtung (1) gemäß einem der voranstehenden Patentansprüche 1 bis 3, **dadurch gekennzeichnet, dass** die Anschlussabschnitte (10, 20) im verbundenen Zustand gegeneinander verdrehbar sind.

5. Anschlusseinrichtung (1) gemäß einem der voranstehenden Patentansprüche 1 bis 4, **dadurch gekennzeichnet, dass** zumindest das zweite Ende (12) des ersten Anschlussabschnittes (10) und/oder das erste Ende (21) des zweiten Anschlussabschnittes (20) teilweise elastisch ausgebildet ist, sodass die Anschlussabschnitte (10, 20) im Überlappungsbereich aneinandergedrückt werden.

6. Anschlusseinrichtung (1) gemäß einem der voranstehenden Patentansprüche 1 bis 5, **dadurch gekennzeichnet, dass** die Betätigungsstellen (32) als sich radial gegenüberliegende Betätigungsstellen (32) ausgebildet sind, wobei beim Zusammendrücken auf die Betätigungsstellen (32) jeweils eine Kraft (F) in radialer Richtung ausgeübt wird.

7. Anschlusseinrichtung (1) gemäß einem der voranstehenden Patentansprüche 1 bis 6, **dadurch gekennzeichnet, dass** die mindestens eine Betätigungsstelle (32) derart ausgebildet ist, dass das Verbindeelement (30) in Umfangsrichtung gedreht wird, um die Vorsprünge (31) aus den Öffnungen (23) zu lösen.

8. Anschlusseinrichtung (1) gemäß einem der voranstehenden Patentansprüche 1 bis 7, **dadurch gekennzeichnet, dass** der Flansch (24) zwei gegenüberliegend angeordnete Vertiefungen (25a) aufweist.

9. Anschlusseinrichtung (1) gemäß einem der voranstehenden Patentansprüche 1 bis 8, **dadurch gekennzeichnet, dass** am Rand des ersten Endes (21) des zweiten Anschlussabschnittes (20) zwei Ausnehmungen (26) ausgebildet sind, welche zur leichteren Montage des Verbindeelementes (30) auf den zweiten Anschlussabschnitt (20) dienen.

10. Verfahren zur Montage einer Anschlusseinrichtung (1) gemäß einem der voranstehenden Patentansprüche 1 bis 9 an eine Pumpe, zumindest aufweisend die folgenden Schritte:
10.1. Aufsetzen des Verbindeelementes (30) auf das erste Ende (21) des zweiten Anschlussabschnittes (20), sodass die Vorsprünge (31) in die Öffnungen (23) eingreifen, indem
die Vorsprünge (31) des Verbindeelementes (30) in den Ausnehmungen (26) am Rand des zweiten Anschlussabschnittes (20) platziert werden und dann das Verbindeelement (30) an den Betätigungsstellen (32) zusammengedrückt wird, sodass zuerst ein Vorsprung (31) in eine Öffnung (23) eingeschoben und dann mittels einer Kippbewegung der andere Vorsprung (31) in die andere Öffnung (23) eingeschoben werden kann,
10.2. Verbinden des ersten Endes (21) des zweiten Anschlussabschnittes (20) mit dem zweiten Ende (12) des ersten Anschlussabschnittes (10), indem das Verbindeelement (30) an den Betätigungsstellen (32) erneut zusammengedrückt wird, sodass die Vorsprünge (31) zumindest teilweise in die Öffnungen (23) zurückgezogen werden und das erste Ende (21) des zweiten Anschlussabschnittes (20) über das zweite Ende (12) des ersten Anschlussabschnittes (10) gestülpt werden kann, und
10.3. Loslassen des Verbindeelementes (30), sodass im nicht-betätigten Zustand die Vorsprünge (31) durch die Öffnungen (23) in die Nut (13) am zweiten Ende (12) des ersten Anschlussabschnittes (10) eingreifen und die Verbindung der Anschlussabschnitte (10, 20) geschlossen ist.

11. Verwendung einer Pumpe mit einer Anschlusseinrichtung (1) gemäß einem der voranstehenden Patentansprüche 1 bis 9, wobei die Pumpe als Tauch-, Teich- oder Gartenpumpe, Hauswasserwerk, Whirlpoolpumpe oder Umwälzpumpe ausgebildet ist.

## Claims

1. Attachment device (1) for a pump with a pump body that has an outlet opening and an inlet opening, at least having: a first attachment portion (10) with a first end (11) and with a second end (12), wherein the first end (11) is attachable to the outlet opening,
a second attachment portion (20) with a first end (21) and with a second end (22), wherein, in an attached state of the attachment device (1), the first end (21) of the second attachment portion (20) is connected to the second end (12) of the first attachment portion (10), and the second end (22) of the second attachment portion (20) is connectable to a liquid line,
an elastic connecting element (30) for connecting the first end (21) of the second attachment portion (20) to the second end (12) of the first attachment portion (10), wherein, in an actuated state of the connecting element (30), the connection of the attachment portions (10, 20) is releasable, wherein
the elastic connecting element (30) is in the form of a closed collar having, on the radial inner side, at least two projections (31) which are situated opposite one another radially and which, in the attached state of the attachment portions (10, 20), engage into a groove (13) in the region of the second end (12) of the first attachment portion (10) through two openings (23) in the region of the first end (21) of the second attachment portion (20),
**characterized in that**
the connecting element (30) has two actuation points (32) at which the connecting element (30) is able to be compressed at least partially for the purpose of releasing and establishing the connection of the two attachment portions (10, 20),
wherein stop means are formed, said stop means causing the connecting element (30) to be centred during the compression thereof, wherein the stop means are in the form of tabs (33) at the actuation points (32), said tabs projecting in an axial direction and, during the compression of the connecting element (30), abutting against an encircling flange (24) that is formed in the region of the first end (21) of the second attachment portion (20).

2. Attachment device (1) according to Claim 1, **characterized in that** the projections (31), when viewed in a circumferential direction of the connecting element (30), have an undercut (34) on at least one side.

3. Attachment device (1) according to either of Claims 1 and 2, **characterized in that** the groove (13) on the first attachment portion (10) is formed so as to be continuous in the circumferential direction.

4. Attachment device (1) according to one of Claims 1 to 3, **characterized in that**, in the connected state, the attachment portions (10, 20) are rotatable relative to one another.

5. Attachment device (1) according to one of Claims 1 to 4, **characterized in that** at least the second end (12) of the first attachment portion (10) and/or the first end (21) of the second attachment portion (20) are/is of partly elastic form, so that the attachment portions (10, 20) are pressed against one another in the overlap region.

6. Attachment device (1) according to one of Claims 1 to 5, **characterized in that** the actuation points (32) are in the form of actuation points (32) situated opposite one another radially, wherein a force (F) is exerted in a radial direction at each of the actuation points (32) during compression.

7. Attachment device (1) according to one of Claims 1 to 6, **characterized in that** the at least one actuation point (32) is formed in such a way that the connecting element (30) is rotated in the circumferential direction in order for the projections (31) to be released from the openings (23).

8. Attachment device (1) according to one of Claims 1 to 7, **characterized in that** the flange (24) has two depressions (25a) which are arranged situated opposite one another.

9. Attachment device (1) according to one of Claims 1 to 8, **characterized in that** two recesses (26) are formed on the edge of the first end (21) of the second attachment portion (20), said recesses serving for easier fitting of the connecting element (30) onto the second attachment portion (20).

10. Method for fitting an attachment device (1) according to one of Claims 1 to 9 onto a pump, at least comprising the following steps:
10.1. mounting the connecting element (30) onto the first end (21) of the second attachment portion (20) such that the projections (31) engage into the openings (23) in that
the projections (31) of the connecting element (30) are placed in the recesses (26) on the edge of the second attachment portion (20) and then the connecting element (30) is compressed at the actuation points (32) such that firstly one projection (31) can be pushed into one opening (23) and then, by means of a tilting movement, the other projection (31) can be pushed into the other opening (23),
10.2. connecting the first end (21) of the second attachment portion (20) to the second end (12) of the first attachment portion (10) in that the connecting element (30) is again compressed at the actuation points (32), so that the projections (31) are retracted at least partially into the openings (23) and the first end (21) of the second attachment portion (20) can be slipped over the second end (12) of the first attachment portion (10), and
10.3. releasing the connecting element (30) so that, in the non-actuated state, the projections (31) engage into the groove (13) at the second end (12) of the first attachment portion (10) through the openings (23) and the connection of the attachment portions (10, 20) is closed.

11. Use of a pump with an attachment device (1) according to one of Claims 1 to 9, wherein the pump is designed as a submersible pump, a pond pump, a garden pump, a domestic-water pump, a whirlpool pump or a circulating pump.

## Revendications

1. Dispositif de raccordement (1) pour une pompe ayant un corps de pompe avec une ouverture de sortie et une ouverture d'entrée, présentant au moins : une première section de raccordement (10) ayant une première extrémité (11) et une deuxième extrémité (12), la première extrémité (11) pouvant être raccordée à l'ouverture de sortie,
une deuxième section de raccordement (20) ayant une première extrémité (21) et une deuxième extrémité (22), la première extrémité (21) de la deuxième section de raccordement (20) étant reliée à la deuxième extrémité (12) de la première section de raccordement (10) dans un état raccordé du dispositif de raccordement (1), et la deuxième extrémité (22) de la deuxième section de raccordement (20) pouvant être reliée à une conduite de liquide,
un élément de liaison élastique (30) pour relier la première extrémité (21) de la deuxième section de raccordement (20) à la deuxième extrémité (12) de la première section de raccordement (10) ; dans un état actionné de l'élément de liaison (30), la liaison des sections de raccordement (10, 20) étant détachable, l'élément de liaison élastique (30) étant réalisé sous la forme d'une manchette fermée sur elle-même, qui présente sur le côté intérieur radial au moins deux saillies (31) radialement opposées, qui, à l'état raccordé des sections de raccordement (10, 20), s'engagent à travers deux ouvertures (23) dans la zone de la première extrémité (21) de la deuxième section de raccordement (20) dans une rainure (13) dans la zone de la deuxième extrémité (12) de la première section de raccordement (10),
**caractérisé en ce que**
l'élément de liaison (30) présente deux zones d'actionnement (32), au niveau desquelles l'élément de liaison (30) peut être comprimé au moins partiellement afin de défaire et d'établir la liaison des deux sections de raccordement (10, 20),
des moyens de butée étant prévus, lesquels assurent un centrage de l'élément de liaison (30) lors de la compression, lesdits moyens de butée étant réalisés sous forme de languettes (33) s'étendant dans une direction axiale au niveau des zones d'actionnement (32), lesquelles viennent en butée, lors de la compression de l'élément de liaison (30), contre une bride périphérique (24) formée dans la zone de la première extrémité (21) de la deuxième section de raccordement (20).

2. Dispositif de raccordement (1) selon la revendication 1 précédente, **caractérisé en ce que** les saillies (31), considérées dans la direction périphérique de l'élément de liaison (30), présentent une contre-dépouille (34) sur au moins un côté.

3. Dispositif de raccordement (1) selon l'une quelconque des revendications 1 à 2 précédentes, **caractérisé en ce que** la rainure (13) est réalisée de manière continue dans la direction périphérique sur la première section de raccordement (10).

4. Dispositif de raccordement (1) selon l'une quelconque des revendications 1 à 3 précédentes, **caractérisé en ce que** les sections de raccordement (10, 20) peuvent être tournées l'une par rapport à l'autre à l'état relié.

5. Dispositif de raccordement (1) selon l'une quelconque des revendications 1 à 4 précédentes, **caractérisé en ce qu'**au moins la deuxième extrémité (12) de la première section de raccordement (10) et/ou la première extrémité (21) de la deuxième section de raccordement (20) est réalisée partiellement élastique, de telle sorte que les sections de raccordement (10, 20) sont pressés l'une contre l'autre dans la zone de chevauchement.

6. Dispositif de raccordement (1) selon l'une quelconque des revendications 1 à 5 précédentes, **caractérisé en ce que** deux points d'actionnement (32) sont réalisés sous forme de points d'actionnement (32) radialement opposés, une force (F) étant exercée sur chacun des points d'actionnement (32) dans la direction radiale lors de la compression.

7. Dispositif de raccordement (1) selon l'une quelconque des revendications 1 à 6 précédentes, **caractérisé en ce que** l'au moins un point d'actionnement (32) est réalisé de telle sorte que l'élément de liaison (30) est tourné dans la direction périphérique pour détacher les saillies (31) des ouvertures (23).

8. Dispositif de raccordement (1) selon l'une quelconque des revendications 1 à 7 précédentes, **caractérisé en ce que** la bride (24) présente deux cavités (25a) agencées en vis-à-vis.

9. Dispositif de raccordement (1) selon l'une quelconque des revendications 1 à 8 précédentes, **caractérisé en ce que** deux évidements (26) sont réalisés sur le bord de la première extrémité (21) de la deuxième section de raccordement (20), lesquels servent à faciliter le montage de l'élément de liaison (30) sur la deuxième section de raccordement (20).

10. Procédé de montage d'un dispositif de raccordement (1) selon l'une quelconque des revendications 1 à 9 précédentes sur une pompe, présentant au moins les étapes suivantes :
10,1. la mise en place de l'élément de liaison (30) sur la première extrémité (21) de la deuxième section de raccordement (20) de telle sorte que les saillies (31) s'engagent dans les ouvertures (23) en
plaçant les saillies (31) de l'élément de liaison (30) dans les évidements (26) sur le bord de la deuxième section de raccordement (20) et en comprimant ensuite l'élément de liaison (30) au niveau des points d'actionnement (32) de telle sorte qu'une saillie (31) peut d'abord être insérée dans une ouverture (23) et ensuite, au moyen d'un mouvement de basculement, l'autre saillie (31) peut être insérée dans l'autre ouverture (23),
10,2. la liaison de la première extrémité (21) de la deuxième section de raccordement (20) à la deuxième extrémité (12) de la première section de raccordement (10) en comprimant à nouveau l'élément de liaison (30) au niveau des points d'actionnement (32) de telle sorte que les saillies (31) soient au moins partiellement rétractées dans les ouvertures (23) et que la première extrémité (21) de la deuxième section de raccordement (20) puisse être enfilée sur la deuxième extrémité (12) de la première section de raccordement (10), et
10,3. le relâchement de l'élément de liaison (30) de telle sorte que, dans l'état non actionné, les saillies (31) s'engagent à travers les ouvertures (23) dans la rainure (13) à la deuxième extrémité (12) de la première section de raccordement (10) et la liaison des sections de raccordement (10, 20) est achevée.

11. Utilisation d'une pompe avec un dispositif de raccordement (1) selon l'une quelconque des revendications 1 à 9 précédentes, la pompe étant réalisée sous la forme d'une pompe submersible, d'une pompe d'étang ou d'une pompe de jardin, d'une station d'épuration domestique, d'une pompe de bain à remous ou d'une pompe de circulation.
